# EUROPÄISCHE PATENTSCHRIFT

(11) **EP 0 438 429 B1**
(45) Veröffentlichungstag und Bekanntmachung des Hinweises auf die Patenterteilung: **10.02.1993**
(21) Anmeldenummer: 89910826.0
(22) Anmeldetag: 04.10.1989
(51) Int. Cl.: F02D 43/00, F02P 11/06, G01L 23/24

(54) **VERFAHREN UND VORRICHTUNG ZUR ZÜNDAUSSETZERERKENNUNG**
PROCESS AND DEVICE FOR RECOGNIZING SPARK FAILURES
PROCEDE ET DISPOSITIF POUR DETECTER DES RATES D'ALLUMAGE

(30) Priorität: 15.10.1988 DE 3835285
(43) Veröffentlichungstag der Anmeldung: 31.07.1991
(73) Patentinhaber: ROBERT BOSCH GMBH, 70442 Stuttgart (DE)
(72) Erfinder: JOOS, Heinz-Günter, D-7145 Markgröningen (DE); KUGLER, Karl-Heinz, D-7143 Vaihingen 11 (DE); KÖHNLE, Hans, D-7141 Schwieberdingen (DE)
(86) Internationale Anmeldenummer: DE8900628
(87) Internationale Veröffentlichungsnummer: WO9004093

(56) Entgegenhaltungen:
- EP-A- 0 222 486
- EP-A-01 356 80
- GB-A- 2 129 872
- US-A- 3 965 677
- US-A- 3 977 239
- US-A- 4 083 234
- US-A- 4 133 205
- US-A- 4 189 940
- US-A- 4 424 709

## Beschreibung

Die Erfindung betrifft ein Verfahren und eine Vorrichtung zum Erkennen von Zündaussetzern bei einer Brennkraftmashine, gemäß Anspruch 1 bzw 8, erster Teil; vergleide US-A- 3 965 677.

### Stand der Technik

Es sind bereits verschiedene Methoden zur Erkennung von Zündaussetzern bei einer Brennkraftmaschine bekannt. Darunter sind Verfahren, die Druck- oder Lichtsignale innerhalb verschiedener Zylinder aufnehmen und einer gemeinsamen Steuereinheit zur Auswertung zuführen. Da die entsprechenden Vorrichtungen aufwendig sind, werden sie bisher in Serienfahrzeugen nicht eingesetzt.

Besonders in Fahrzeugen, die mit einem Katalysator ausgerüstet sind, ist es jedoch wünschenswert, dauernd auf Zündaussetzer überwachen zu können. Dies, weil Zündaussetzer zur Folge haben, daß unverbrannter Kraftstoff in den Katalysator kommt und sich dann dort entzündet. Dies führt öfters zum Abbrennen des Katalysators und in besonders schweren Fällen zu einem Fahrzeugbrand.

Ein Verfahren, das zur Erkennung solcher Fehler das Abgasdrucksignal überwacht und bei Abweichungen von einem erwarteten Verlauf Maßnahmen zum Schutz des Katalysators ergreift, wird in der US-A 3 965 677 beschrieben. Im Rahmen dieses Verfahrens werden Maximum und Minimum der Abgasdruckamplitude innerhalb einer vorgegebenen Zeitspanne, d.h. über mehrere Perioden des Abgasdrucksignals gemessen. Wenn die Differenz dieser Werte, nach einer Korrektur zur Kompensation von Ansaugrohrunterdruckeinflüssen, über einem Schwellwert liegt, wird dies als Zeichen für eine Fehlfunktion interpretiert, und die Abgase werden dann um den Katalysator herumgeleitet.

Die US-PS 3 977 239 offenbart ein weiteres Verfahren, das die periodische Schwankung des Abgasdruckes zu Diagnosezwecken ausnutzt. Der Druckverlauf im Abgastrakt über der Zeit wird in ein elektrisches Signal umgewandelt und spektral analysiert. Neben einer Frequenzkomponente, die auf die Zündfrequenz zurückzuführen ist, können andere Komponenten auftreten, die für Zündaussetzer charakteristisch sind. Ein Vergleich der Amplituden liefert ein Maß für die Ungleichmäßigkeit der Arbeitstakte.

Eine ähnliche Vorgehensweise wird in der US-A 4 189 940 aufgezeigt Hier wird zusäzlich zu dem Drucksignal des Abgases als weitere Größe der Druck im Kurbelgehäuse gemessen Beide Drucksignale werden nach Umwandlung in elektrische Größen spektral in Frequenzkomponenten zerlegt. Die Amplituden dieser Komponenten werden daraufhin zu Diagnosezwecken verglichen.

Den drei letztgenannten Verfahren ist gemeinsam, daß die Drücke nicht für eine einzelne Abgasdruckschwankung gemessen werden. Dies stellt sich z.B dann als Mangel dar, wenn nicht nur das Auftreten eines Fehlers, sondern auch noch seine Lokalisierung gewü nscht wird.

Zum Beispiel können die genannten Verfahren einen Fehler in einem bestimmten Zylinder nicht diesem Zylinder zuordnen, da die Drücke der zu einer einzelnen Zündung gehörenden Abgasdruckschwankung nicht individuell erfalt werden.

Der Erfindung liegt die Aufgabe zugrunde, ein Verfahren zur Zündaussetzererkennung anzugeben, das sich für die Verwendung in Serienfahrzeugen eignet und das die oben genannte Einschränkung der Diagnosemöglichkeiten vermeidet. Der Erfindung liegt weiterhin die Aufgabe zugrunde, eine einfach aufgebaute Vorrichtung zur Durchführung des Verfahrens anzugeben.

### Vorteile der Erfindung

Die Erfindung ist für das Verfahren durch die Merkmale von Anspruch 1 und für die Vorrichtung durch die Merkmale von Anspruch 8 gegeben. Vorteilhafte Weiterbildungen und Ausgestaltungen des Verfahrens sind Gegenstand der Unteransprüche.

Das erfindungsgemäße Verfahren ist ein Druckmeßverfahren. Es wird jedoch nicht mehr der Verbrennungsdruck in jedem Zylinder gemessen, sondern der Druck im Abgastrakt wird ermittelt. Dies bringt zwei Vorteile mit sich. Zum einen können mit einem einzigen Drucksensor alle Zylinder überwacht werden, und zum anderen lassen sich nicht nur Fehler in der Zündung, sondern auch Fehler im Abgastrakt feststellen. Ob ein in der Praxis ausgeführtes Verfahren diese beiden Vorteile aufweist, hängt von der angewandten Ausführungsform ab. Wird der Abgasdruck für jeden Zylinder durch einen gesonderten Sensor ermittelt, der im jeweiligen Krümmerrohr angeordnet ist, geht der Vorteil des besonders einfachen Aufbaus verloren. Berücksichtigt das konkret angewandte Verfahren nicht, daß ein Druckabfall durch fehlende Zündung oder durch einen an falscher Stelle geöffneten Abgastrakt hervorgerufen sein kann, wird der eigentlich mögliche Vorteil nicht genutzt, daß diese Fehler unterschieden werden können.

Um Fehler feststellen zu können, wird beim erfindungsgemäßen Verfahren mit jedem Zündtakt der Abgasdruck gemessen und mit einem er'warteten Wert verglichen. Ist der Unterschied zwischen den beiden Werten größer als es einer vorgegebenen Differenz entspricht, wird ein Ereignissignal ausgegeben. Die Häufigkeit dieser Signale wird ermittelt und dann, wenn eine Häufigkeitsschwelle überschritten wird, wird ein Signal ausgegeben, das einen Fehler anzeigt. Das Fehlersignal kann z. B. dazu benutzt werden, eine Warnlampe einzuschalten. Vorteilhafterweise wird jedoch durch Ausgestaltungen des Verfahrens genauer ermittelt, wodurch das Fehlersignal hervorgerufen ist, und wenn dies gelungen ist, wird eine gezielte Fehlerbehandlungsmaßnahme ergriffen.

Es wird darauf hingewiesen, daß die Häufigkeit der Ereignissignale, die zum Ausgeben eines Fehlersignales führt, nach Zweckmäßigkeitsgründen gewählt wird. Der Grenzfall ist dadurch gegeben, daß sofort beim Auftreten eines Ereignissignales das Fehlersignal ausgegeben wird, daß der Häufigkeitswert, mit dem verglichen wird, also ein Ereignissignal auf einen Takt ist. In den meisten Fällen ist es jedoch günstiger, erst dann auf einen Fehler zu erkennen, wenn innerhalb einer vorgegebenen größeren Taktzahl, z. B. innerhalb von 1000 Takten, eine vorgegebene Anzahl von Ereignissignalen überschritten wird, z. B. 10 Ereignissignale.

Ob ein Zündfehler oder ein Abgastraktfehler vorliegt, läßt sich insbesondere nach zwei Prinzipien überprüfen. Das erste Prinzip geht dahin, daß dann, wenn eine vorgegebene Häufigkeitsschwelle, die jedoch relativ niedrig liegt, überschritten ist, ein Zündungsfehler in einem einzelnen Zylinder vorliegt. Ist dagegen die Häufigkeit von Ereignissignalen sehr hoch, ist dies entweder durch einen Fehler verursacht, der das gesamte Zündsystem betrifft, oder der Abgastrakt ist geöffnet (d. h. er ist noch an einer anderen Stelle als nur am Ende des Auspuffrohres oder der Auspuffrohre offen). In diesem Fall wird ein zweites Prinzip genutzt, nämlich dasjenige, daß der zeitliche Verlauf des Abgasdruckes im Falle eines Zündaussetzers anders aussieht als im Falle eines geöffneten Abgastraktes. Der tatsächliche Verlauf wird demgemäß mit einem vorgegebenen Verlauf verglichen und abhängig vom Vergleichsergebnis wird ein zu diesem Ergebnis zugehöriges Fehlersignal ausgegeben.

Wird nicht nur überprüft, ob der Abgasdruck-Meßwert um eine vorgegebene Differenz unter dem Erwartungswert liegt, sondern wird zusätzlich überprüft, ob der Meßwert um mehr als eine vorgegebene andere Differenz über dem Erwartungswert liegt, läßt sich auch überprüfen, ob der Abgastrakt verstopft ist.

Die erfindungsgemäße Vorrichtung weist Mittel zum Ausführen der oben genannten Verfahrensschritte auf. Sie ist vorteilhafterweise durch einen entsprechend programmierten Mikroprozessor realisiert.

### Zeichnung

Die Erfindung wird im folgenden anhand eines durch Figuren veranschaulichten Ausführungsbeispieles näher erläutert. Es zeigen:
Fig. 1 ein Blockdiagramm einer erfindungsgemäßen Vorrichtung an einer Brennkraftmaschine; und
Fig. 2 ein Flußdiagramm zum Erläutern des Ablaufs eines bevorzugten Verfahrens zum Erkennen von Zündaussetzern.

### Beschreibung von Ausführungsbeispielen

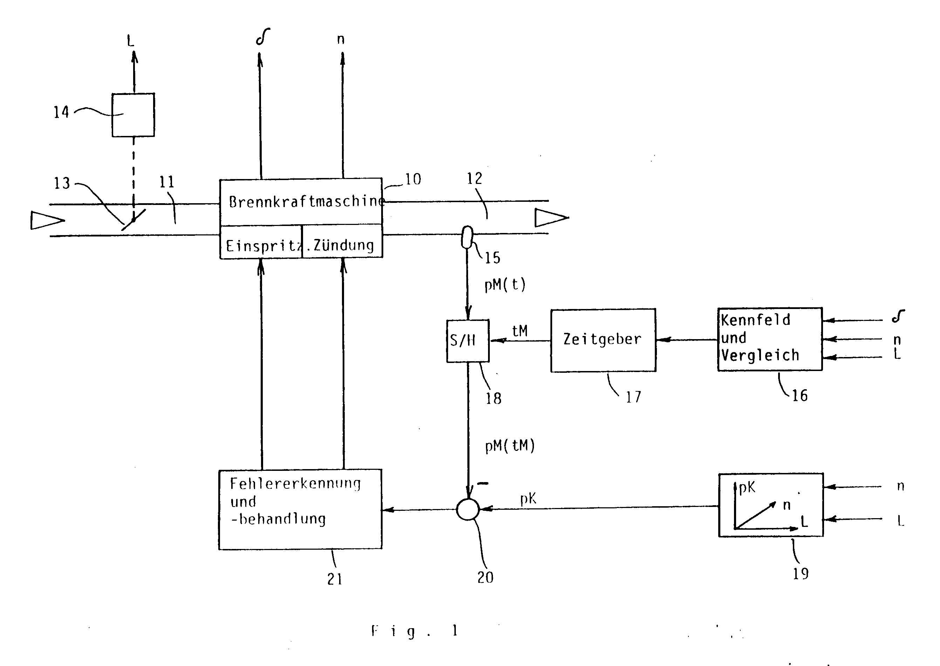

Die Vorrichtung zum Erkennen von Zündaussetzern gemäß dem Blockschaltbild von Fig. 1 überwacht eine Brennkraftmaschine 10, die in Fig. 1 schematisch ohne Unterscheidung einzelner Zylinder dargestellt ist. Auch der Ansaugtrakt 11 und der Abgastrakt 12 sind jeweils nur als einfaches Rohr ohne die Verzweigungen in die Zylinder bzw. aus den Zylindern dargestellt. Im Ansaugtrakt 11 ist eine Drosselklappe 13 angeordnet, deren Stellung durch einen beliebig ausgestalteten Winkelmesser 14 erfaßt wird. Die Stellung der Drosselklappe ist ein Zeichen für die Last L, mit der die Brennkraftmaschine 10 betrieben wird. Das Lastsignal kann auch auf andere bekannte Weise gewonnen werden. Im Abgastrakt 12 ist ein Drucksensor 15 angeordnet, der ein Drucksignal pM (p) ausgibt. An Signalen, die von der Vorrichtung zum Erkennen von Zündaussetzern noch verarbeitet werden, sind in Fig. 1 der Kurbelwinkel δ und die Drehzahl n eingezeichnet.

Bei jedem Zylinder der Brennkraftmaschine öffnet die zugehörige Auslaßventilanordnung zu einem ganz bestimmten Kurbelwinkel δ . Das Öffnen erfolgt aufgrund der Nockenform zunächst langsam und dann beschleunigt. Dementsprechend steigt die in den Abgastrakt ausgestoßene Abgasmenge zunächst langsam und dann schneller an, um schließlich wieder abzufallen. Das Maximum des Abgasstromes am Auslaßort ist in der Regel bereits erreicht, bevor die Auslaßventilanordnung ganz geöffnet hat. Dem sich zeitlich ändernden Abgasstrom am Ort der Auslaßventilanordnung ist ein sich zeitlich ändernder Druck zugeordnet. Es ist nun zu beachten, daß sich der Druck und das Abgas mit unterschiedlichen Geschwindigkeiten ausbreiten. Der Druck pflanzt sich nämlich mit Schallgeschwindigkeit fort, während das ausgestoßene Abgas mit einer bestimmten Strömungsgeschwindigkeit weitergeleitet wird. Wesentlich für das Folgende ist die Ausbreitung des Druckes. Das Drucksignal benötigt von der Auslaßventilanordnung bis zum Drucksensor 15 eine Zeit, die dem Produkt aus Schallgeschwindigkeit und Abstand zwischen Auslaßventilanordnung und Drucksensor entspricht. Für unterschiedliche Werte von Drehzahl n und Last L ist relativ genau bekannt, zu welchem Kurbelwinkel δ der Druck an der Auslaßventilanordnung maximal ist. Da außerdem bekannt ist, welche Zeit das Drucksignal von einer jeweiligen Auslaßventilanordnung bis zum Drucksensor benötigt, ist genau bekannt, zu welchen Zeiten, jeweils bezogen auf den vorstehend genannten Kurbelwinkel, der von einem bestimmten Zylinder herrührende Maximaldruck am Drucksensor 15 ansteht. Idealerweise genau zu diesem Zeitpunkt ist der Meßwert vom Drucksensor zu erfassen.

Um dies zu ermöglichen, sind im Flußdiagramm gemäß Fig. 1 ein Meßwinkel-Kennfeld 16, ein Zeitgeber 17 und eine Abtast/ Halte-Schaltung 18 eingezeichnet. Dem Meßwinkel-Kennfeld 16 werden dauernd die aktuellen werte von Kurbelwinkel δ , Drehzahl n und Last L zugeführt. Abhängig von den Werten von Drehzahl n und Last L wird aus dem Kennfeld 16 derjenige Kurbelwinkel ausgelesen, zu dem der Abgasdruck an der Auslaßventilanordnung maximal ist. Sobald der tatsächliche Kurbelwinkel δ mit diesem Kurbelwinkel δM für den maximalen Abgasdruck übereinstimmt, wird an den Zeitgeber 17 ein Triggersignal ausgegeben. Der Zeitgeber wurde zuvor auf eine Zeitspanne gesetzt, die der oben genannten Verzögerungszeit zwischen der Abgasventilanordnung an demjenigen Zylinder, für den gerade der Druck zu messen ist, und dem Drucksensor entspricht. Wenn die gesetzte Zeitspanne abgelaufen ist, ist dies das Zeichen dafür, daß der Meßzeitpunkt tM erreicht ist. Auf ein entsprechendes Triggersignal vom Zeitgeber 17 hin erfaßt die Abtast/Halte-Schaltung 18 den aktuellen Abgasdruck pM (tM).

Abhängig von jeweils vorliegenden Werten von Drehzahl n und Last L ist bekannt, welchen Meßwert der Drucksensor 15 bei ordnungsgemäßer Funktion der Gesamtanordnung anzeigen müßte. Dieser Erwartungs-Abgasdruck pK wird aus einem Abgasdruck-Kennfeld 19 ausgelesen und in einer Vergleichsstelle 20 wird von diesem Wert der Abgasdruck-Meßwert pM (tM) abgezogen. Die Differenz wird einem Mittel 21 zur Fehlererkennung und Fehlerbehandlung zugeführt. Dieses Mittel analysiert das Differenzsignal und bestimmt nach einem weiter unten beschriebenen Verfahrensablauf, ob ein Mangel in der Kraftstoffzumessung oder in der Zündung vorliegt. Abhängig vom Ergebnis der Untersuchung werden unterschiedliche Maßnahmen ergriffen.

Es wird nochmals darauf hingewiesen, daß die verschiedenen Blockschaltbildteile gemäß Fig. 1 vorzugsweise durch einen programmierten Mikroprozessor realisiert sind.

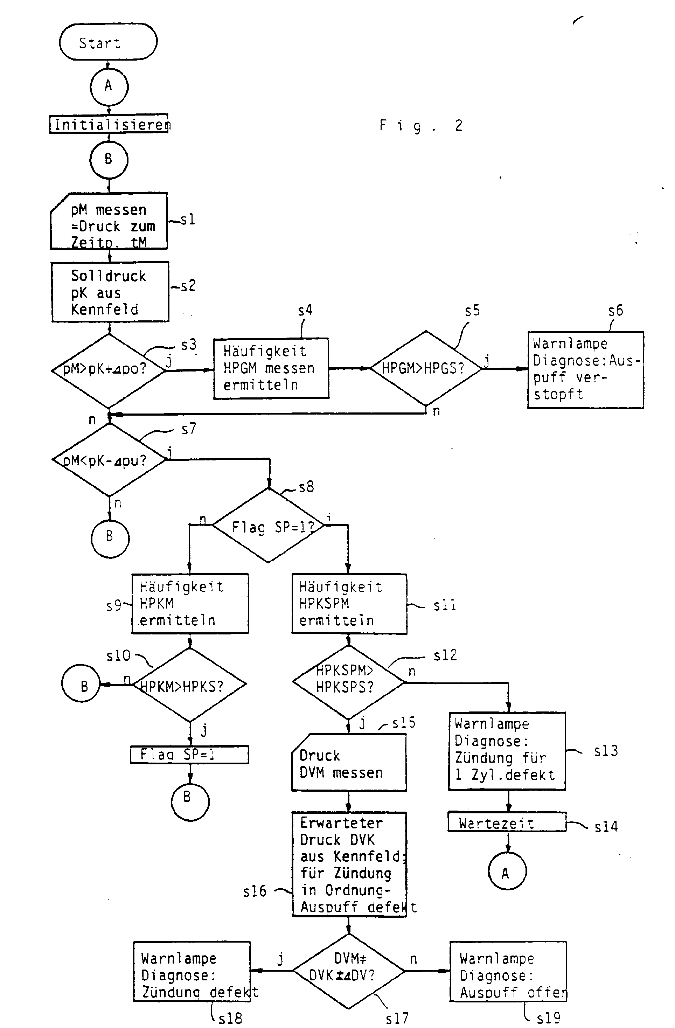

Der vorstehend in Zusammenhang mit der Vorrichtung gemäß Fig. 1 grob beschriebene Verfahrensablauf wird nun anhand des Flußdiagramms von Fig. 2 näher erläutert.

Nach dem Start des Verfahrens wird zwischen zwei Marken A und B eine Initialisierung verschiedener Werte vorgenommen. In einem Schritt s1 wird der Abgasdruck pM zum Meßzeitpunkt tM erfaßt. Wie der Zeitpunkt tM festgelegt wird, wurde oben anhand von Fig. 1 erläutert. In einem Schritt s2 wird der ebenfalls oben näher erläuterte Erwartungs-Abgasdruck pK aus dem Kennfeld 19 ausgelesen. In einem Schritt s3 wird geprüft, ob der Abgasdruck-Meßwert pM um mehr als eine vorgegebene Differenz Δpo über dem Abgasdruck-Erwartungswert pK liegt, d. h. es wird geprüft, ob der Abgastrakt verstopft ist. Wird die untersuchte Frage bejaht, entspricht dies dem Abgeben eines Druckanstiegssignales. In einem Schritt s4 wird dann überprüft, wie häufig ein solches Druckanstiegssignal innerhalb einer vorgegebenen Taktanzahl lag. Dies ist die gemessene Häufigkeit HPGM. Sie wird in einem schritt s5 mit einer Sthwellhäufigkeit HPGS verglichen. Ist die Sollhäufigkeit erreitht oder überschritten, wird in einem Schritt s6 dafür gesorgt, daß eine Warnlampe aufleuchtet und eine Diagnosemeldung abgespeichert wird, die anzeigt, daß der Abgastrakt verstopft ist.

Ist die Schwellhäufigkeit dagegen unterschritten, folgt ein Schritt s7, der auch dann erreicht wird, und zwar unmittelbar auf schritt s3 folgend, wenn in schritt s3 die Untersuchungsfrage auf verstopften Abgastrakt verneint wird. In Schritt s7 wird untersucht, ob der Abgasdruck-Meßwert um mehr als eine vorgegebene Differenz Δ pu unter dem Abgasdruck-Erwartungswert pK liegt. Wird die untersuchte Frage verneint, kehrt das Verfahren zur Marke B zurück.

Wird die Untersuchungsfrage im Schritt s7 dagegen bejaht, zeigt dies an, daß der gemessene Abgasdruck unerwartet niedrig liegt. Dies kann davon herrühren, daß die Zündung ausgefallen ist oder daß der Abgastrakt geöffnet ist. Die Unterscheidung dieser Fälle wird dadurch vorbereitet, daß in einem Schritt s8 untersucht wird, ob ein Flag SP gesetzt ist. Zunächst ist dieses Flag nicht gesetzt, da es zwischen den Marken A und B initialisiert wurde. Ist es nicht gesetzt, folgt ein Schritt s9, in dem eine Häufigkeit HPKM gemessen wird. In einem Schritt s10 wird die gemessene Häufigkeit HPKM mit einer Schwellhäufigkeit HPKS verglichen.

Wird in Schritt s8 dagegen festgestellt, daß das Flag SP gesetzt ist, wird in einem schritt sll eine Häufigkeit HPKSPM gemessen und diese wird in einem folgenden schritt s12 mit einer Schwellhäufigkeit HPKSPS verglichen.

Zu den Häufigkeiten HPGM gemäß Schritt s4, HPKM gemäß Schritt s9 und HPKSPM gemäß Schritt s11 sowie zu den Schwellhäufigkeiten HPGS gemäß Schritt s5, HPKS gemäß Schritt s10 und HPKSPS gemäß Schritt s12 sei das Folgende angemerkt. Es handelt sich jeweils um eine Anzahl gemessener Ereignissignale innerhalb einer vorgegebenen Taktzahl. Ein Ereignissignal ist entweder- das Bejahen der Frage in Schritt s3 (Druckanstiegssignal) oder das Bejahen der Frage in Schritt s7 (Druckabfallssignal). Bei einem Fehler im Abgastrakt, sei es durch Verstopfung oder durch eine unerwünschte Öffnung, werden Ereignissignale fast mit jedem Takt auftreten. Viel seltener treten dagegen Ereignissignale auf, wenn nur die Zündung in einem einzelnen Zylinder ausfällt. Diese unterschiedlithen Tatsachen sind zu berücksithtigen, wenn festgelegt wird, wie die Häufigkeiten bestimmt werden und wie die zugehörigen Schwellwerte festgelegt werden. Ist das Ausfallen der Zündung eines einzelnen Zylinders zu überprüfen, muß eine relativ große Taktzahl überprüft werden, da es manchmal in Instationärübergängen zu Zündaussetzern kommt, ohne daß ein Fehler im Zündsystem vorliegt. Die Häufigkeit HPKM wird im Ausführungsbeispiel dadurch bestimmt, daß überwacht wird, wieviele Druckabfallsignale auf 1000 Takte anfallen. Dies erfolgt dadurch, daß zunächst mit einem Zähler ermittelt wird, wieviele Druckabfallsignale innerhalb von 100 Takten auftreten. Immer nach 100 Takten wird dieser Zähler rückgesetzt und das Zählergebnis wird mit einem Zehntel seines Wertes zu einer Summe addiert, die mit 9/10 berücksichtigt wird. Diese neue Summe wird beim nächsten Addieren wieder mit 9/10 berücksichtigt. Dadurch werden immer die Ergebgnisse der letzten 1000 Takte berücksichtigt. Die so ermittelte Häufigkeit HPKM wird mit einer Schwellhäufigkeit HPKS verglichen, die bei mittleren Lasten und mittleren Drehzahlen den Wert 10 aufweist. Die anderen Häufigkeitswerte HPGM und HPKSPM, die zum Feststellen von Fehlern dienen, die nicht durch Zündaussetzer in einem einzelnen Zylinder bedingt sind, werden im bevorzugten Ausführungsbeispiel auf nur 100 Takte bezogen. Die Schwellhäufigkeit HPGS für den Fall unerwartet hoher Drücke ist 50 Signale auf 100 Takte. Die Schwellhäufigkeit HPKSPS ist so gewählt, daß das Verhältnis von Druckabfallsignalen zu Taktsignalen etwas höher liegt als das Verhältnis von einem Zylinder zur Gesamtzylinderzahl. Bei einem Vierzylindermotor, bei dem dieses Verhältnis also 1:4 ist, ist die gewählte Schwellhäufigkeit 30 Druckabfallsignale auf 100 Takte.

Wie oben erwähnt, wird im Schritt s10 überprüft, ob die Häufigkeit HPKM die Schwellhäufigkeit HPKS erreicht oder überschreitet. Ist dies nicht der Fall, kehrt das Verfahren zur Marke B zurück. Ist dies dagegen der Fall, wird die genannte Flagge SP gesetzt, woraufhin das Verfahren ebenfalls zur Marke B zurückkehrt. Wenn dann wieder der Schritt s8 erreicht wird, verzweigt das Verfahren zum Schritt sll, da ja nun die Flagge SP gesetzt ist. Im Schritt s12 wird untersucht, ob die Häufigkeit HPKSPM die Schwellhäuf.igkeit HPKSPS erreicht oder überschreitet.

Der Grund für die im vorigen Absatz genannte Schrittfolge ist der folgende. Wird in Schritt s10 das Erreichen oder Überschreiten der Schwellhäufigkeit HPKS festgestellt, ist noch nicht klar, ob Fehler mit gleichverteilter Häufigkeit über die jeweils untersuchten 100 letzten Takte auftraten, oder ob die Fehlerhäufigkeit in den letzten Takten sehr hoch war. Fällt die Zündung in einem einzelnen Zylinder zeitweilig aus, werden allmählich während der 1000 überprüften letzten Takte z. B. 11 Druckabfallsignale ermittelt. Trat andererseits während 989 Takten keinerlei Druckabfallssignal auf, dann aber 11 in Folge, ist dies ein Zeichen, daß nicht die Zündung eines einzelnen Zylinders defekt ist. Diese Fälle werden mit Hilfe der Schritte s11 und s12 unterschieden.

Wird in Schritt s12 festgestellt, daß die Häufigkeit HPKSPM unter der Schwellhäufigkeit HPKSPS liegt, ist dies das Zeichen dafür, daß nur die Zündung für einen einzelnen Zylinder fehlerhaft arbeitet. In einem folgenden Schritt s13 wird eine Warmlampe zum Aufleuchten gebracht und eine zugehörige Diagnosemeldung wird abgespeichert. Außerdem werden Fehlermaßnahmen ergriffen.

Beim bevorzugten Ausführungsbeispiel wird die Fehlerhäufigkeit nicht nur für alle Zylinder gemeinsam festgestellt, sondern die Meßwerte für jeden einzelnen Zylinder ausgewertet. Dies ist unproblematisch, da ohnehin bei der Ansteuerung des Drucksensors 15 genau darauf zu achten ist, daß diese jeweils dann erfolgt, wenn die Druckamplitude einer Druckwelle von jeweils einem der Zylinder durchläuft.,Die Hauptfehlermaßnahme in schritt s13 besteht darin, die Einspritzung für den fehlerbehafteten Zylinder abzuschalten. Dies, damit dem Katalysator nicht weiterhin unverbrannter Kraftstoff zugeführt wird. Nach Ablauf einer Wartezeit in einem schritt s14 wird die Einspritzung auch für den fehlerbehafteten Zylinder wieder aufgenommen, wobei jedoch gleichzeitig die Zündenergie für diesen Zylinder erhöht wird. Das Verfahren kehrt dann zur Marke A zurück. Ergibt sich, daß der Fehler durch das Erhöhen der Zündschließzeit nicht beseitigt ist, wird auf Dauer die Einspritzung für den fehlerbehafteten Zylinder abgeschaltet. Ergibt sich dagegen, daß der Fehler nicht mehr vorhanden ist, wird nach erneutem Ablauf einer Wartezeit wieder auf Normalbetrieb geschaltet. Stellt sich dann der Fehler erneut ein, wird auf Dauer die erhöhte Zündschließzeit eingestellt. In allen Fällen bleibt die Warnlampe dauernd leuchten. Ergibt sich jedoch, daß keinerlei Fehler mehr auftritt, erlischt die Warnlampe und die Diagnosemeldung wird gelöscht.

Es wird darauf hingewiesen, daß die Fehlermaßnahmen betreffend die Zündschließzeit und das Einstellen der Einspritzung auch nur einzeln oder in umgekehrter Reihenfolge angewendet werden können.

Ergibt sich in schritt s12, daß die Häufigkeit HPKSPM über der Schwellhäufigkeit HPKSPS liegt, ist dies das Zeichen dafür, daß nicht nur die Zündung für einen einzelnen Zylinder mängelbehaftet ist, sondern daß sehr häufig Druckabfallsignale auftreten, die entweder durch Mängel in der ganzen Zündanlage oder durch einen geöffneten Abgastrakt verursacht sein können. Um die Zündfehler von den Abgastraktfehlern unterscheiden zu können, werden in einem schritt s15 mehrere Abgasdruckmessungen vorgenommen, beim Ausführungsbeispiel drei Messungen. Die mittlere Messung erfolgt zu dem anhand von Fig. 1 und Schritt s1 erläuterten Zeitpunkt tM. Die erste Messung erfolgt um eine vorgegebene Zeitspanne davor und die zweite Messung um eine vorgegebene Zeitspanne danach. In einem schritt s16 werden erwartete Druckwerte DKK ermittelt, wie sie auftreten sollten, wenn die Zündung fehlerfrei arbeitet, aber der Auspufftrakt geöffnet ist. Die erwarteten Druckwerte können wieder aus einem Kennfeld ausgelesen werden, wie dies oben anhand von Fig. 1 und schritt s2 für die einzelnen Abgasdruck-Erwartungswerte erläutert wurde. Beim bevorzugten Ausführungsbeispiel wird jedoch anders vorgegangen. Es wird nämlich der in Schritt s15 bei der mittleren Messung ermittelte Abgasdruck-Meßwert als Ausgangswert herangezogen. Mit Hilfe dieses Wertes werden die Erwartungswerte berechnet, wie sie für den ersten und den dritten Meßzeitpunkt erwartet werden. Im Falle eines Abgastraktfehlers liegen diese Drücke, bezogen auf den Maximaldruck, wesentlich niedriger als im Falle eines Zündungsfehlers.

In einem Schritt s17 wird der gemessene Druckverlauf mit dem erwarteten Druckverlauf verglichen. Beim Ausführungsbeispiel geschieht dies dadurch, daß die gemessenen Druckverlaufswerte DVM aus der ersten und der dritten Messung mit den zugehörigen erwarteten Werten DVK verglichen werden. Stimmen für beide Wertepaare die Vergleichswerte innerhalb vorgegebener Grenzen +/- Δ DV miteinander überein, ist dies das Zeichen dafür, daß die Zündung defekt ist. In diesem Fall wird in einem Schritt s18 die Warnlampe zum Aufleuchten gebracht, und eine Diagnosemeldung wird abgespeichert. Besondere Fehlermaßnahmen werden nicht ergriffen, da in der Regel das Fahrzeug nicht mehr funktionsfähig ist, wenn die Zündung weitgehend ausgefallen ist.

Wird in Schritt s17 die Untersuchungsfrage dagegen verneint, wird in einem schritt s19 ebenfalls die Warnlampe zum Aufleuchten gebracht, jedoch wird die Diagnosemeldung ausgegeben, daß der Abgastrakt an unerwünschter Stelle geöffnet ist. Fehlermaßnahmen werden keine ergriffen, daß die einzige sinnvolle Maßnahme diejenige ist, die unerwünschte Öffnung wieder zu verschließen, welche Maßnahme nicht automatisch durchgeführt werden kann.

Es wird darauf hingewiesen, daß sich im Abgastrakt bei bestimmten Betriebszuständen stehende Wellen einstellen, die auch dann noch erhalten bleiben, wenn die Zündung in einem der Zylinder ausfällt. In diesem Fall kann der Ausfall der Zündung nicht festgestellt werden. Es ist daher zweckmäßig, für Betriebszustände, von denen bekannt ist, daß das Signal vom Drucksensor die untersuchten Fehler nur ungenau anzeigt, die Häufigkeitsmessung eingestellt wird. Es wird dann weder die Zahl der Takte noch die Zahl etwa doch anfallender Fehlersignale hochgezählt. Betriebszustände, bei denen derart verfahren wird, werden zweckmäßigerweise in einem Kennfeld abgelegt. Immer dann, wenn Kennfeldwerte erfüllt sind, unterbleibt die Häufigkeitsmessung.

Es wird darauf hingewiesen, daß diejenigen Werte, die gemäß obiger Beschreibung beim bevorzugten Ausführungsbeispiel aus Kennfeldern gewonnen werden, auch durch mathem:tische Berechnungen ermittelt werden können. Dies erfordert jedoch erhöhte Rechenzeit.

Der Sensor zur Druckmessung ist vorzugsweise ein piezoelektrischer Sensor, also ein solcher, wie er auch bisher zum Messen des Druckes innerhalb eines Zylinders verwendet wurde.

## Patentansprüche

1. Verfahren zum Erkennen von Zündaussetzern bei einer Brennkraftmaschine, bei der Abgasdrucksignale gemessen und mit betriebsgrößenabhängigen Erwartungswerten verglichen werden, dadurch gekennzeichnet, daß
a) der maximal Abgasdruck für jeden Auspufftakt ermittelt wird,
b) ein Abgasdruck-Erwartungswert für jeden Auspufftakt aus Werten von Betriebskenngrößen bestimmt wird,
c) der maximal Abgasdruck jeweils mit dem zugehörigen Abgasdruck-Erwartungswert verglichen wird und dann, wenn der minimale Abgasdruck den Abgasdruckerwartungswert um mehr als eine vorgegebene Differenz unterschreitet, ein Ereignissignal ausgegeben wird,
d) eine erste Häufigkeit HPKM dieser Signale in einer größeren Zahl von Auspufftakten ermittelt wird und dann, wenn die erste Häufigkeit HPKM größer als ein Schwellwert HPKS ist, eine zweite Häufigkeit HPKSPM der Ereignissignale in einer kleineren Zahl von Auspufftakten ermittelt wird,
e) die zweite Häufigkeit mit einem Schwellwert HPKSPS verglichen wird und daß bei Unterschreiten dieses Schwellwerts auf Zündfehler einzelner Zylinder geschlossen wird.

2. Verfahren nach Anspruch 1, dadurch gekennzeichnet, daß
- dann, wenn die Häufigkeit HPKSPM einen Schwellwert übersteigt, ein Zünddefekt/Abgastrakt-Fehlersignal ausgegeben wird.

3. Verfahren nach Anspruch 2, dadurch gekennzeichnet, daß auf das Zünddefekt/Abgastrakt-Fehlersignal hin
- für mindestens einen Takt der tatsächliche Abgasdruckverlauf ermittelt wird,
- jeder ermittelte Verlauf mit einem erwarteten Abgasdruckverlauf verglichen wird, und
- dann , wenn das Vergleichsergebnis zeigt, daß der gemessene Verlauf im wesentlichen einem erwarteten Verlauf entspricht, wie er bei ordnungsgemäßer Zündung, jedoch geöffnetem Abgastrakt vorliegt, ein Abgastrakt-Offen-Signal ausgegeben wird,
- aber dann, wenn das Vergleichsergebnis zeigt, daß der gemessene Verlauf im wesentlichen einem erwarteten Verlauf entspricht, wie er bei defekter Zündung, jedoch ordnungsgemäß arbeitendem Abgastrakt vorliegt, ein Zünddefekt-Signal ausgegeben wird.

4. Verfahren nach einem der Ansprüche 1-3, dadurch gekennzeichnet, daß dann, wenn der Abgasdruck-Meßwert um mehr als eine vorgegebene Differenz über dem Erwartungswert liegt, ein Druckanstiegssignal ausgegeben wird, die Häufigkeit HPGM dieses Signals ermittelt wird, und dann, wenn die ermittelte Häufigkeit einen Schwellwert übersteigt, ein Abgastrakt-Zu-Signal ausgegeben wird.

5. Verfahren nach einem der Ansprüche 1 bis 4, dadurch gekennzeichnet, daß es im Falle einer Anwendung auf eine Brennkraftmaschien mit sequentieller Einspritzung außer für alle Zylinder gemeinsam auch für die Zylinder einzeln ausgeführt wird.

6. Verfahren nach Anspruch 5, dadurch gekennzeichnet, daß auf das Zündaussetzer-Fehlersignal von einem Einzelzylinder-Erkennungsverfahren hin die Einspritzung für den fehlerbehafteten Zylinder abgeschaltet wird.

7. Verfahren nach einem der Ansprüche 1 bis 6, dadurch gekennzeichnet, daß auf das Zündaussetzer- oder das Zünddefekt-Fehlersignal hin die Zündenergie erhöht wird.

8. Vorrichtung zum Erkennen von Zündaussetzern bei einer Brennkraftmaschine, bei der Abgasdrucksignale gemessen und mit betriebsgrößenabhängigen Erwartungswerten verglichen werden,
dadurch gekennzeichnet, daß es folgende Mittel aufweist:
- ein Mittel (16, 17, 18) zum Erfassen des maximalen Abgasdrucks bei jedem Auspufftakt,
- ein Mittel (19) zum Bestimmen eines Abgasdruck-Erwartungswertes aus Werten für Betriebsgrößen für jeden Auspufftakt,
- ein Mittel (20, 21) zum Vergleichen jedes Abgasdruck-Meßwertes mit dem zugehörigen Erwartungswert und zum Ausgeben eines Ereignissignals, wenn die beiden Werte um mehr als eine vorgegebene Differenz voneinander abweichen,
- ein Mittel (21) zum Ermitteln einer ersten Häufigkeit HPKM dieser Signale in einer größeren Zahl von Auspufftakten und zum Vergleich der ersten Häufigkeit HPKM mit einem Schwellwert HPKS und zum Ermitteln einer zweiten Häufigkeit HPKSPM der Ereignissignale in einer kleineren Zahl von Auspufftakten und zum Vergleich der zweiten Häufigkeit mit einem Schwellwert HPKSPS und zur Ausgabe eines Zündfehlersignals bei Unterschreiten dieses Schwellwert, bei Überschreitung des Schwellwertes HPKS durch die Häufigkeit HPKM.

9. Vorrichtung nach Anspruch 8, dadurch gekennzeichnet, daß ferner folgende Mittel vorhanden sind:
- ein Mittel (18, S15) zum Erfassen des Druckverlaufs während Auspufftakten, ein Mittel (19, S16, 21) zum Bestimmen einer Abgasdruck-Erwartungswert-Kurve aus Werten für Betriebskenngrößen für Auspufftakte und zum Vergleichen dieser Kurve mit dem gemessenem Druckverlauf für diese Takte,
- ein Mittel (21, S17, S18, S19) zur Ausgabe von Fehlersignalen in Abhängigkeit vom Ergebnis des Vergleichs des gemessenen Druckverlaufs mit dem erwarteten Druckverlauf.

## Claims

1. Method for recognizing misfires in an internal combustion engine, in which exhaust gas pressure signals are measured and compared with expected values dependent on operating parameters, characterized in that
a) the maximum exhaust gas pressure is determined for each exhaust stroke,
b) an exhaust gas pressure expected value is determined for each exhaust stroke from values of operating parameters,
c) the maximum exhaust gas pressure is compared in each case with the associated exhaust gas pressure expected value and whenever the maximum exhaust gas pressure falls below the exhaust gas pressure expected value by more than a specified difference, an event signal is emitted,
d) a first frequency HPKM of these signals in a relatively large number of exhaust strokes is determined and whenever the first frequency HPKM is greater than a threshold value HPKS, a second frequency HPKSPM of the event signals in a relatively small number of exhaust strokes is determined,
e) the second frequency is compared with a threshold value HPKSPS and that, if this threshold value is not attained, ignition faults in individual cylinders are inferred.

2. Method according to Claim 1, characterized in that whenever the frequency HPKSPM exceeds a threshold value, an ignition defect/exhaust gas line fault signal is emitted.

3. Method according to Claim 2, characterized in that on receipt of the ignition defect/exhaust gas line fault signal
- the actual exhaust gas pressure variation is determined for at least one stroke,
- each variation determined is compared with an expected exhaust gas pressure variation, and
-- whenever the comparison result shows that the variation measured corresponds substantially to an expected variation such as is present with correct ignition but open exhaust gas line, an exhaust gas line open signal is emitted,
-- but whenever the comparison result shows that the measured variation corresponds substantially to an expected variation such as is present with defective ignition but correctly operating exhaust gas line, an ignition defect signal is emitted.

4. Method according to one of Claims 1-3, characterized in that whenever the exhaust gas pressure measured value exceeds the expected value by more than a specified difference, a pressure rise signal is emitted, the frequency HPGM of this signal is determined and, whenever the frequency determined exceeds a threshold value, an exhaust gas line closed injection is emitted.

5. Method according to one of Claims 1 to 4, characterized in that in the case of application to an internal combustion engine with sequential injection the method is carried out for the cylinders individually in addition to all the cylinders in common.

6. Method according to Claim 5, characterized in that when the misfire fault signal is received from an individual cylinder recognition method, the injection is switched off for the cylinder subject to the fault.

7. Method according to one of the Claims 1 to 6, characterized in that the ignition energy is increased on receipt of the misfire fault signal or the ignition defect fault signal.

8. Device for recognizing misfires in an internal combustion engine, in which exhaust gas pressure signals are measured and compared with expected values dependent on operating parameters, characterized in that it has the following means:
- a means (16, 17, 18) for recording the maximum exhaust gas pressure for each exhaust stroke,
- a means (19) for determining an exhaust gas pressure expected value from values of operating parameters for each exhaust stroke,
- a means (20, 21) for comparing each exhaust gas pressure measured value with the associated expected value and for emitting an event signal when the two values differ from one another by more than a specified difference,
- a means (21) for determining a first frequency HPKM of these signals in a relatively large number of exhaust strokes and for comparing the first frequency HPKM with a threshold value HPKS and for determining a second frequency HPKSPM of the event signals in a relatively small number of exhaust strokes and for comparing the second frequency with a threshold value HPKSPS and for emitting an ignition error signal if this threshold value is not attained when the threshold value HPKS is exceeded by the frequency HPKM.

9. Device according to Claim 8, characterized in that the following means are furthermore provided:
- a means (18, S15) for recording the pressure variation during exhaust strokes, a means (19, S16, 21) for determining an exhaust gas pressure expected value curve from values for operating parameters for exhaust strokes and for comparing this curve with the measured pressure variation for these strokes,
- a means (21, S17, S18, S19) for emitting fault signals as a function of the result of the comparison of the measured pressure variation with the expected pressure variation.

## Revendications

1. Procédé pour détecter des ratés d'allumage d'un moteur à combustion interne, selon lequel on mesure les signaux de pression des gaz d'échappement et on les compare à des valeurs prévisibles dépendant des grandeurs de fonctionnement, procédé caractérisé en ce que :
a) on détermine la pression maximale des gaz d'échappement pour chaque cadence d'échappement,
b) on détermine une valeur prévisible de la pression des gaz d'échappement pour chaque cadence d'échappement à partir des valeurs des grandeurs caractéristiques de fonctionnement,
c) on compare la pression maximale des gaz d'échappement à la pression prévisible des gaz d'échappement et si la pression maximale des gaz d'échappement dépasse la valeur prévisible de la pression des gaz d'échappement de plus d'une différence prédéterminée, on émet un signal d'événement,
d) on détermine une première fréquence (HPKM) de ces signaux au cours d'un nombre plus grand de cadences d'échappement et, si la première fréquence (HPKM) est supérieure à une valeur de seuil (HPKS), on détermine une seconde fréquence (HPKSPM) des signaux d'événement dans un nombre plus petit de cadences d'échappement,
e) on compare la seconde fréquence à une valeur de seuil (HPKSPS) et, en cas de dépasse vers le bas de cette valeur de seuil, on en déduit qu'il y a un raté d'allumage dans un certain cylindre.

2. Procédé selon la revendication 1, caractérisé en ce que, si la fréquence (HPKSPM) dépasse une valeur de seuil, on émet un signal de défaut défaut d'allumage/défaut de tubulure de gaz d'échappement.

3. Procédé selon la revendication 2, caractérisé en ce qu'à la suite d'un signal de défaut défaut d'allumage/défaut de tubulure de gaz d'échappement,
- pour au moins une cadence, on détermine le tracé réel de la pression des gaz d'échappement,
- on compare chaque tracé obtenu à un tracé de pression d'échappement prévisible, et
- si le résultat de la comparaison montre que le tracé mesuré correspond pour l'essentiel au tracé prévisible si l'allumage est normal mais s'il y a une ouverture dans la tubulure des gaz d'échappement, il émet un signal d'ouverture de tubulure d'échappement,
- mais si le résultat de la comparaison montre que le tracé mesuré correspond pour l'essentiel à un tracé prévisible pour un allumage défectueux mais une tubulure d'échappement fonctionnant normalement, il émet un signal de défaut d'allumage.

4. Procédé selon l'une des revendications 1-3, caractérisé en ce que, si la valeur mesurée de la pression des gaz d'échappement dépasse la valeur prévisible d'une différence supérieure à une différence prédéterminée, il émet un signal de montée en pression qui détermine la fréquence (HPGM) de ce signal et si la fréquence obtenue dépasse un seuil, il émet un signal de fermeture de la tubulure des gaz d'échappement.

5. Procédé selon l'une des revendications 1 à 4, caractérisé en ce qu'en cas d'application à un moteur à combustion interne à injection séquentielle, il s'applique en commun à tous les cylindres, mais également séparément à chaque cylindre.

6. Procédé selon la revendication 5, caractérisé en ce qu'en réponse à un signal de défaut de raté d'allumage d'un procédé de détection de cylindres séparés, on coupe l'injection du cylindre défectueux.

7. Procédé selon l'une des revendications 1 à 6, caractérisé en ce qu'en réponse au signal de défaut d'allumage ou de raté d'allumage, on augmente l'énergie d'allumage.

8. Dispositif de détection des ratés d'allumage d'un moteur à combustion interne, selon lequel on mesure les signaux de pression des gaz d'échappement et on les compare à des valeurs prévisibles dépendant des caractéristiques de fonctionnement, dispositif caractérisé par les moyens suivants :
- un moyen (16, 17, 18) pour détecter la pression maximale des gaz d'échappement à chaque cadence d'échappement,
- un moyen (19) pour déterminer une valeur prévisible de la pression des gaz d'échappement à partir des valeurs correspondant aux grandeurs caractéristiques pour chaque cadence d'échappement,
- un moyen (20, 21) pour comparer chaque valeur mesurée de la pression des gaz d'échappement et la valeur prévisible correspondante et pour émettre un signal d'événement lorsque les deux valeurs diffèrent d'une différence supérieure à une différence prédéterminée,
- un moyen (21) pour déterminer une première fréquence (HPKM) de ces signaux en un nombre de cadences d'échappement plus grand et pour comparer la première fréquence (HPKM) à une valeur de seuil (HPKS) et pour détermine une seconde fréquence (HPKSPM) des signaux d'événement sur un nombre plus réduit de cadences d'échappement et pour comparer la seconde fréquence à une valeur de seuil (HPKSPS) et émettre un signal de défaut d'allumage en cas de dépassement vers le bas de ce seuil, lorsque la fréquence (HPKM) dépasse le seuil (HPKS).

9. Dispositif selon la revendication 8, caractérisé, en outre, par les moyens suivants :
- un moyen (18, S15) pour détecter le tracé de la pression au cours des cadences d'échappement, un moyen (19, S16, 21) pour déterminer une courbe de valeurs prévisibles de la pression des gaz d'échappement à partir des valeurs de caractéristiques de fonctionnement pour les cadences d'échappement et pour comparer cette courbe à la courbe de pression mesurée pour ces cadences,
- un moyen (21, S17, S18, S19) pour émettre des signaux d'erreurs en fonction du résultat de la comparaison de la courbe de pression mesurée et de la courbe de pression prévisible.
